# EUROPÄISCHE PATENTSCHRIFT

(11) **EP 1 700 673 B1**
(45) Veröffentlichungstag und Bekanntmachung des Hinweises auf die Patenterteilung: **04.06.2008**
(21) Anmeldenummer: 06005052.3
(22) Anmeldetag: 13.03.2006
(51) Int. Cl.: B25J 15/02

(54) **Greiferwerkzeug**
Gripping tool
Outil de préhension

(30) Priorität: 12.03.2005 DE 102005011800; 31.03.2005 DE 102005014558
(43) Veröffentlichungstag der Anmeldung: 13.09.2006
(73) Patentinhaber: Schunk GmbH & Co. KG Spann- und Greiftechnik, 74348 Lauffen (DE)
(72) Erfinder: Michler, Gerhard, 74360 Ilsfeld (DE)
(74) Vertreter: Bulling, Alexander

(56) Entgegenhaltungen:
- EP-A- 0 532 174
- DE-A1- 3 336 778
- DE-A1- 19 604 649

## Beschreibung

Die Erfindung betrifft ein Greiferwerkzeug mit einem Gehäuse, in dem zur verschiebbaren Aufnahme von Greiferwerkzeugbacken Backenführungen bzw. Backenführungsausnehmungen vorgesehen sind, wobei zwischen den beiden Greiferwerkzeugbacken ein quer zur Bewegungsebene der Greiferwerkzeugbacken verstellbares Stellteil vorgesehen ist, das insbesondere mit miteinander in Eingriff stehenden, geneigt verlaufende Gleitflächen aufweisenden Getriebeelementen ausgestattet ist, die derart zusammenwirken, dass beim Auf- oder Abwärtsverstellen des Stellteils die Greiferwerkzeugbacken quer zu einer Bewegungsebene des Stellteils auseinander- oder zusammengeschoben werden. Die Getriebeelemente können dabei ein Keilhakengetriebe bzw. einen Schrägzug bilden.

Es ist bereits ein Parallelgreifer für Roboter mit einem Gehäuse bekannt (DE 195 23 221 C), in dem zur verschiebbaren Aufnahme von Greiferwerkzeugbacken Backenführungen bzw. Backenführungsausnehmungen vorgesehen sind, wobei zwischen den beiden Greiferwerkzeugbacken ein quer zur Bewegungsebene der Greiferwerkzeugbacken verstellbares Stellteil vorgesehen ist, das mit miteinander in Eingriff stehenden, geneigt verlaufende Gleitflächen aufweisenden Nuten ausgestattet ist, die derart zusammenwirken, dass beim Auf- oder Abwärtsverstellen des Stellteils die Greiferwerkzeugbacken quer zu einer Bewegungsebene des Stellteils auseinander- oder zusammengeschoben werden.

Die Greiferwerkzeuge sind flach ausgebildet und weisen sehr lange doppelte Führungsnuten und Führungsfedern auf, so dass sie nur geringe Spannkräfte erzeugen können. Da jedes Greiferwerkzeug auf jeder Seite mit zwei übereinander angeordneten Führungsfedern ausgestattet ist, werden die Führungseigenschaften der Greiferwerkzeuge verschlechtert und außerdem die Herstellungskosten derartiger Greiferwerkzeuge stark erhöht. Außerdem bietet eine derartige Bauweise der Greiferwerkzeuge wenig Platz zum Anschluss von Greiferarmen.

Aus der US 5,967,581 A ist eine Greifvorrichtung bekannt geworden, bei der zwei Greiferbacken über ein gemeinsames Stellteil aufeinander zu und voneinander weg bewegt werden. Die Greiferbacken können dabei Führungsaussparungen aufweisen, in die an gehäuseseitig fest angeordneten Führungsstangen eingreifen.

Aus der DE 33 36 778 A1 ist eine Greifvorrichtung bekannt geworden, bei der die Greiferbacken einerseits Backenführungen aufweisen, die in Ausnehmungen in einem Gehäuse geführt werden, und andererseit süber fest am Gehäuse angeordnete Führungsbolzen gegen Verdrehen gesichert sind, wobei die Greiferbacken über ein quer zur Bewegungsebene der Greiferbacken verstellbares Stellteil auseinander - oder zusammengeschoben werden.

Der Erfindung liegt die Aufgabe zugrunde, das Greiferwerkzeug mit einem Gehäuse derart auszubilden und anzuordnen, dass es über lange Standzeiten einwandfrei arbeiten kann. Insbesondere soll dabei eine effektive Verdrehsicherung der Backe bei seitlich auf die Backe wirkenden Kräften gegeben sein. Zudem wünschenswert ist eine gute Abdichtung des Greiferwerkzeugs bei auf das Werkzeug einwirkenden Umwelteinflüssen.

Gelöst wird die Aufgabe mit einem Greiferwerkzeug mit den Merkmalen des Anspruchs 1.

Bei einem derartigen Greifwerkzeug sind folglich an jeder Greifwerkzeugbacke zwei parallel verlaufende, nebeneinander angeordnete und zylinderförmige Backenführungen vorgesehen. Die Backenführungen verlaufen dabei in gehäuseseitig angeordneten zylinderförmigen Backenführungsausnehmungen. Die Backenführungsausnehmungen erstrecken sich dabei vorteilhafterweise über die gesamte Längsrichtung des Gehäuses und weisen einen weitgehend konstanten Querschnitt auf. In zwei diagonal gegenüber liegende offenen Enden der Backenführungsausnehmungen greifen dabei vorzugsweise die backenseitig angeordneten Backenführungen der einen Greiferwerkzeugbacke und in die anderen beiden diagonal gegenüber liegende offenen Enden der Backenführungsausnehmungen die Backenführungen der anderen Greiferwerkzeugbacke ein. Zur Verstellung der Greiferwerkzeugbacken ist dabei vorgesehen, dass zwischen einer Backenführung der einen Greiferwerkzeugbacke und einer Backenführung der anderen Greiferwerkzeugbacke ein quer zur Bewegungsebene der Greiferwerkzeugbacken verstellbares Stellteil vorgesehen ist. Beim durch beispielsweise fluidisches Druckbeaufschlagen Auf- oder Abwärtsverstellen des Stellteils werden die Greiferwerkzeugbacken aufeinander zu oder voneinander weg bewegt. Die jeweilige Backenführung, die nicht mit dem Stellteil zusammenwirkt, wirkt dabei als Drehsicherung in der jeweiligen Backenführungsausnehmung, in die sie eingreift, mit dem Gehäuse zusammen.

Erfindungsgemäß übernimmt folglich eine Backenführung der einen Greiferwerkzeugbacke durch das Zusammenwirken mit dem Stellteil eine Antriebsfunktion der Greiferwerkzeugbacke und die jeweils andere Backenführung durch Zusammenwirken mit der jeweiligen, ihr zugeordneten Backenführungsausnehmung eine Drehsicherungsfunktion. Aufgrund dieser Doppelfunktion wird erfindungsgemäß erreicht, dass zum einen ausreichend hohe Antriebskräfte bereitgestellt werden können und zum anderen eine ausreichende Drehsicherung der Greiferwerkzeugbacken erreicht wird. Selbst bei hohen, seitlich auf die Greiferwerkzeugbacken wirkenden Kräften wird aufgrund des Vorsehens der Drehsicherung gewährleistet, dass ein Verkeilen oder Verklemmen des Stellteils mit dem Stellteil zusammenwirkenden Backenführungen ausgeschlossen wird. Die Greiferwerkzeugbacken können selbst bei hohen, um die Bewegungsrichtung der Greiferwerkzeugbacken wirkenden Kräften leichtgängig bewegt werden.

Dabei ist vorgesehen, dass die die Drehsicherung bildende Backenführung der einen Greiferwerkzeugbacke von der gleichen Backenführungsausnehmung aufgenommen ist, wie die mit dem Stellteil zusammenwirkende Backenführung der jeweils anderen Greiferwerkzeugbacke. Bei einer derartigen Ausgestaltung der Erfindung sieht das Gehäuse des Greiferwerkzeugs lediglich zwei Backenführungsausnehmungen vor. In die eine Backenführungsausnehmung greift einerends die die Drehsicherung bildende Backenführung der einen Greiferwerkzeugbacke und andererends die mit dem Stellteil zusammenwirkende Backenführung der anderen Greiferwerkzeugbacke. Entsprechend greift in die zweite Backenführungsausnehmung eine die Drehsicherung bildende Backenführung und eine mit dem Stellteil zusammenwirkende Backenführung jeweils einer Greiferwerkzeugbacke. Insgesamt kann hierdurch eine kompakte Bauweise erreicht werden, wobei vergleichsweise wenig Bauteile vorgesehen sind.

Gemäß einer Weiterbildung der Erfindung ist denkbar, dass die nebeneinander angeordneten Backenführungen einer Greiferwerkzeugbacke in Richtung ihrer Bewegungsebene eine unterschiedlich große Länge aufweisen. Insbesondere die Backenführung, welche mit dem Stellteil zusammenwirkt, kann eine größere Länge aufweisen, da an dieser Backenführung Bauraum zum Zusammenwirken mit dem Stellteil vorzusehen ist.

Die die Drehsicherung bildende Backenführung kann kürzer ausfallen; durch sie muss lediglich gewährleistet werden, dass in der ausgefahrenen Hubendlage der jeweiligen Greiferwerkzeugbacke diese Backenführung noch ausreichend in die zugehörige Backenführungsausnehmung eingreift.

Vorzugsweise weisen die Backenführungen an einer Greiferwerkzeugbacke und/oder sämtliche Backenführungen einen identischen Querschnitt auf- Dies ist deshalb vorteilhaft, weil dann nicht nur die Backenführungen, sondern auch die Backenführungsausnehmungen einen entsprechenden, identisch ausgebildeten Querschnitt aufweisen. Insgesamt ergibt sich eine vereinfachte Fertigung des Greiferwerkzeugs.

Bei einer besonders bevorzugten Ausgestaltung der Erfindung ist vorgesehen, dass die Backenführungen einen runden Querschnitt aufweisen. Durch Vorsehen von runden Querschnitten werden eine Reihe von Vorteilen erzielt. Beispielsweise lassen sich kreiszylinderförmige Außenkonturen der Backenführungen auf einfache Art und Weise vorteilhaft gegenüber dem Gehäuse abdichten. Kleine Toleranzen können eingehalten werden. Zudem werden bei seitlich auf die Greiferwerkzeugbacke wirkenden Kräfte an den Backenführungen und am Gehäuse auftretende Reaktionskräfte aufgrund von runden Außenkonturen vorteilhaft abgeleitet beziehungsweise übertragen. Spannungsspitzen und damit zusammenhängende Verschleißerscheinungen können an den gegeneinander bewegten Bauteilen werdend dadurch weitestgehend unterbunden werden.

Zur Abdichtung der Backenführungen gegen das Gehäuse können an den Backenführungen und/oder am Gehäuse Ringnuten für Ringdichtungen vorgesehen sein.

Um insgesamt in zur Bewegungsrichtung der Greiferwerkzeugbacken quer verlaufenden Richtung Bauraum einzusparen, kann vorgesehen sein, dass die Backenführungen in dem Bereich, in dem sie mit dem Stellteil zusammenwirken, eine parallel zur verstellrichtung des Stellteils verlaufende Abflachung aufweisen. Insbesondere dann, wenn die Backenführungen einen im wesentlichen kreisrunden Querschnitt aufweisen, kann dieser kreisrunde Querschnitt im Bereich des Stellteils abgeflacht sein. In der Abflachung kann dann eine entsprechend schräg verlaufende Gleitfläche vorgesehen sein, die mit dem Stellteil zusammenwirkt.

Zum Zusammenwirken des Stellteils mit den jeweiligen Backenführungen kann vorgesehen sein, dass das Stellteil und/oder die zugehörigen Backenführungen mit miteinander im Eingriff stehenden Getriebeelementen ausgestattet sind. Die Getriebeelemente können dabei in Verstellrichtung schräg geneigte Gleitflächen aufweisen, wobei die Getriebeelemente von Nuten und mit den Nuten zusammenwirkenden Federn, Gleitrollen und/oder Führungszapfen gebildet sein können. Die Federn, Gleitrollen und/oder Führungszapfen greifen dabei derart in eine Feder ein, dass ein entsprechendes Verstellen der Greiferwerkzeugbacken beim Verstellen des Stellteils erreicht wird. Die Getriebeelemente können insbesondere ein Keilhakengetriebe beziehungsweise ein Schrägzuggetriebe bilden.

Gemäß einer bevorzugten Ausführungsform der erfindungsgemäßen Lösung ist schließlich vorgesehen, dass in der langen Backenführung der einen Greiferwerkzeugbacke die die Gleitfläche aufweisende erste Nut und in der zweiten Backenführung der anderen Greiferwerkzeugbacke die zweite, die Gleitfläche aufweisende Nut vorgesehen ist, wobei die Neigungen der beiden Nuten mit Bezug auf eine Längsmittelachse einer Kolbenstange oder in der Seitenansicht der Greiferwerkzeugbacke V-förmig zueinander ausgerichtet sind.

Eine Verbesserung der Backenführung wird auch dadurch erreicht, wenn jede Greiferwerkzeugbacke mit nur je einem eine geneigt verlaufende Gleitfläche aufweisenden Getriebeelement ausgestattet ist, das eine geneigt verlaufende Gleitfläche aufweist, die mit zumindest einer geneigt verlaufenden Gleitfläche des Stellteils zusammenwirken kann.

Ferner ist es vorteilhaft, wenn jede Greiferwerkzeugbacke und das Stellteil an ihren beiden Außen- bzw. Innenseiten jeweils nur eine Nut und Feder aufweisen, die ineinander greifen. Durch die beiden Backenführungen lassen sich die beiden Greiferwerkzeugbacken einwandfrei, ohne zu verkanten sehr gut verstellen. Die zylinderförmige Ausbildung der Backenführungen gestattet dabei ein wesentlich Leichteres Abdichten der Backenführungen im Gehäuse, so dass dieses gegen Spritzwasser und verunreinigungen wesentlich besser abgedichtet werden kann. Da die zweite parallel zur ersten verlaufende Backenführung ebenfalls zylinderförmig ausgebildet ist, können die Toleranzen aller zu verstellenden Teile wesentlich kleiner gewählt werden, so dass sich dies sehr positiv auf das verstellen und die Standzeit der Greiferwerkzeuge auswirkt-Durch die besondere Ausbildung der Backenführungen kommt man insgesamt auch mit wesentlich weniger Bauteilen aus.

Es ist ferner von Vorteil, wenn die an je einer Außenseite bzw. einem Seitenteil des Stellteils vorgesehene Nut und/oder Feder mit Bezug auf die an der anderen Außenseite bzw. dem anderen Seitenteil vorgesehene Feder und/oder Nut gegenläufig geneigt angeordnet bzw. in der Ansicht von der Seite v-förmig zueinander ausgerichtet sind. Hierdurch wird erreicht, dass nach langen Laufzeiten der Greiferwerkzeuge ein ganz geringer Verschleiß auftritt.

Eine zusätzliche Möglichkeit ist gemäß einer weiterbildung der Erfindung, dass die Greiferwerkzeugbacken jeweils an ihrer einen Außenseite eine lange und an ihrer anderen Außenseite eine kurze Nut oder Feder aufweisen. Durch den Einsatz von nur zwei paarweise zusammenwirkenden Nuten und Federn, kann die Anordnung der Führungselemente verbessert werden und bei kleiner Baulänge des Gehäuses sogar insgesamt verlängert werden, so dass ein verkanten der Greiferwerkzeugbacken, wie es bisher bei nicht konzentrischer Belastung der Greiferwerkzeugbacken üblich war, vermieden werden kann.

Im Zusammenhang mit der erfindungsgemäßen Ausbildung und Anordnung ist es von Vorteil, wenn das Stellteil ein Kolben mit der Kolbenstange und einer Kolbenplatte ist, der mit Hilfe einer Dichtplatte an das Gehäuse angeschlossen und/oder in einer in der Dichtplatte vorgesehenen Öffnung verschiebbar aufgenommen ist. Hierdurch werden die Führungseigenschaften des Kolbens wesentlich verbessert und die Dichtungsprobleme zwischen Kolben und Gehäuse ausgeschaltet.

Vorteilhaft ist es ferner, wenn das Kolbengehäuse, das das Stellteil oder den Kolben aufnimmt, am Gehäuse angeordnet ist. Hierdurch lassen sich Kolben, Kolbengehäuse und Gehäuse der Greiferwerkzeuge wesentlich leichter herstellen.

Außerdem ist es vorteilhaft, wenn die Dichtplatte Teil des Gehäuses bzw. mit diesem fest verbunden ist. Durch Integrieren der Dichtplatte im Gehäuse kann auf zusätzliche Abdichtmittel zwischen Kolben und Gehäuse verzichtet werden.

Ferner ist es vorteilhaft, wenn das Gehäuse und/oder die Greiferwerkzeugbacken und/oder alle beweglichen Teile aus einem Kohlefaserwerkszoff und/oder Glasfaserwerkstoff bestehen.

Weitere Vorteile und Einzelheiten der Erfindung sind in den Patentansprüchen und in der Beschreibung erläutert und in den Figuren 10 bis 15 dargestellt.

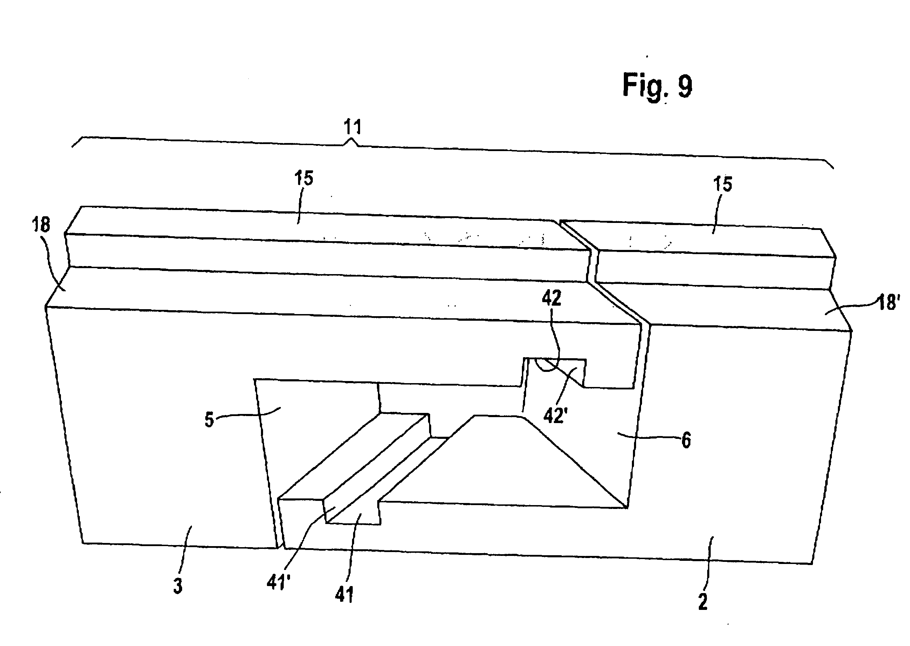

Eine vergleichbare Anordnung, die nicht Gegenstand der Erfindung ist, wird in den Figuren 1 bis 9 gezeigt.

Dabei zeigen:
- Fig. 1: eine perspektivische Darstellung eines Parallelgreifers mit einem Gehäuse zur verschiebbaren Aufnahme von zwei Greiferwerkzeugbacken, die mit Hilfe von Führungen in im Gehäuse vorgesehenen Backenführungsausnehmungen verstellbar aufgenommen sind, in etwa in einer Stellung, in der ein Werkstück abgegeben wird,
- Fig. 2: eine perspektivische Darstellung eines Parallelgreifers mit dem Gehäuse wie in Fig. 1, der sich in einer ein werkstück abgebenden Stellung befindet bzw. in einer Stellung, in der das Werkstück umfasst werden kann,
- Fig. 3: eine perspektivische Darstellung einer Greiferwerkzeugbacke in der Ansicht von unten des Greifers nach Figur 1 und 2,
- Fig. 4: eine perspektivische Darstellung des Gehäuses des Greiferwerkzeugs nach Figur 1 und 2,
- Fig. 5: eine Gesamtdarstellung der beiden sich gegenüberliegenden Greiferwerkzeugbacken ohne Greiferarme des Greifers nach Figur 1 und 2,
- Fig. 6: eine Explosions-Darstellung eines Stellteils bzw. eines Kolbens mit den beiden Greiferwerkzeugbacken des Greifers nach Figur 1 und 2,
- Fig. 7: eine Teilschnittdarstellung des Stellteils bzw. des Kolbens gemäß Figur 6 mit einer Greiferwerkzeugbacke,
- Fig. 8: eine perspektivische Darstellung des Kolbens gemäß Figur 6 in der Ansicht von oben,
- Fig. 9: eine perspektivische Darstellung der beiden Greiferwerkzeugbacken des Greifers nach Figur 1 und 2 in zusammengeschobener Stellung in der Ansicht von unten,
- Fig. 10: eine perspektivische Darstellung eines erfindungsgemäßen Greiferwerkzeugs mit zwei Greiferwerkzeugbacken in zusammengeschobener Stellungmit zwei parallel zueinander daran angeordneten Backenführungen,
- Fig. 11: eine perspektivische Darstellung einer Greiferwerkzeugbacke gemäß Fig. 10 in der Ansicht von oben mit den beiden unterschiedlich langen Backenführungen,
- Fig. 12: eine perspektivische Darstellung eines Gehäuses für die Greiferwerkzeugbacken gemäß Figur 10,
- Fig. 13: eine perspektivische Darstellung eines weiteren Kolbens mit Gleitrollen für die Greiferwerkzeugbacke,
- Fig. 14: die Gleitrollen gemäß Fig. 13,
- Fig. 15: die Kolbenstange zur Aufnahme der Gleitrollen.

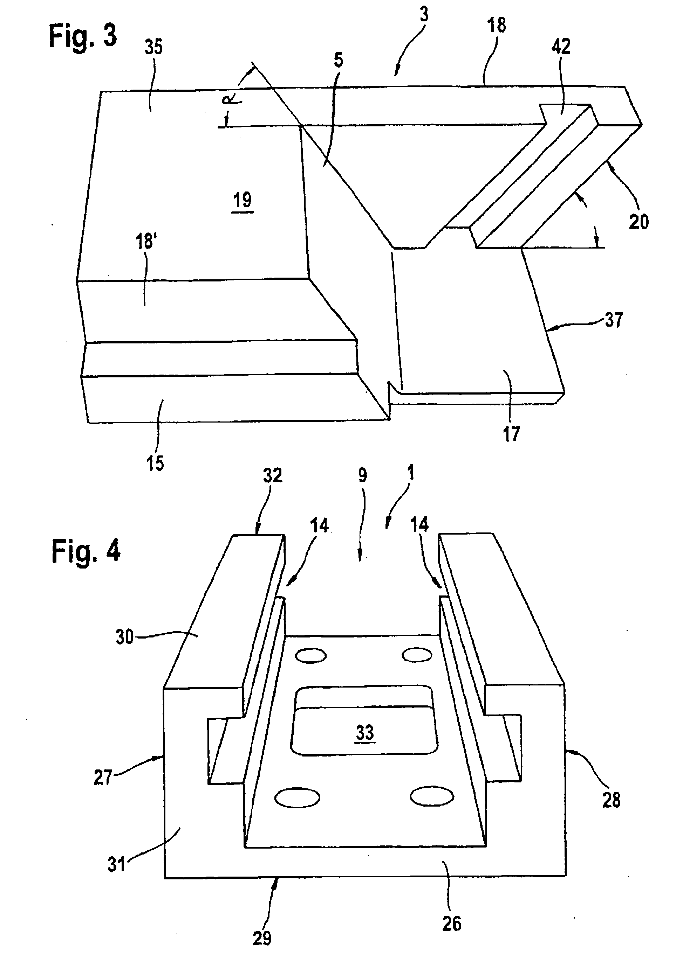

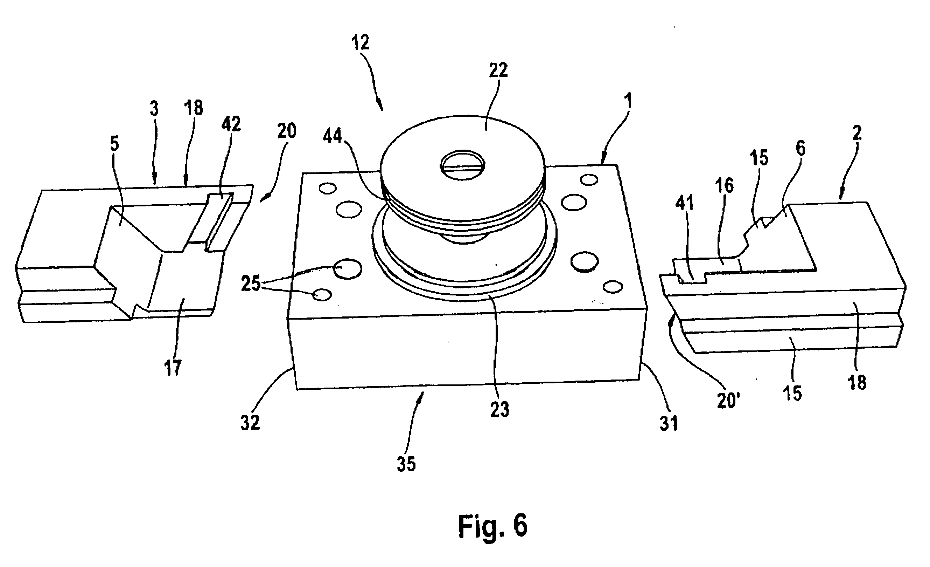

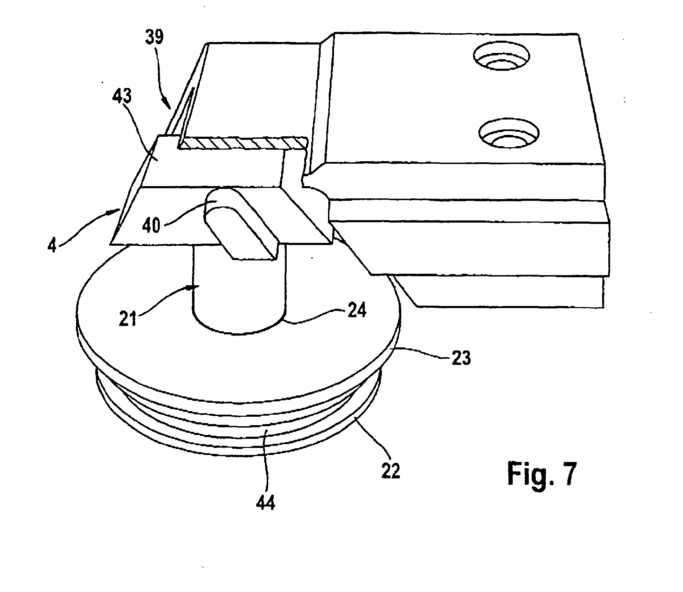

In der Zeichnung ist in Fig. 6 ein Parallelgreifer 12 in der Ansicht von unten ohne Greiffinger dargestellt. Der Parallelgreifer 12 besteht aus einem rechteckförmigen Gehäuse 1 mit zahlreichen Montagebohrungen 25, an die ein in der Zeichnung nicht dargestellter Greiferarm angeschlossen werden kann, mit dem der Parallelgreifer 12 bzw. das Gehäuse 1 in die gewünschte Position bewegt werden kann. Das Gehäuse 1 besteht aus einer Grundplatte 26 mit zwei aufrechtstehenden Seitenteilen 27, 28, die die gleiche Länge wie das Gehäuse 1 bzw. die Grundplatte 26 aufweisen (Figur 4). Das Gehäuse 1. weist ferner eine Unterseite 29, eine Oberseite 35 mit in der Zeichnung nicht dargestellten Anschlussbohrungen für Greiferfinger sowie Stirnseiten 31, 32 und eine in der Grundplatte 26 konzentrisch angeordnete, rechteckförmige Öffnung 33 auf, durch die sich ein in Fig. 7 dargestelltes Stellteil 4 erstreckt, das nachstehend als Kolben bezeichnet ist.

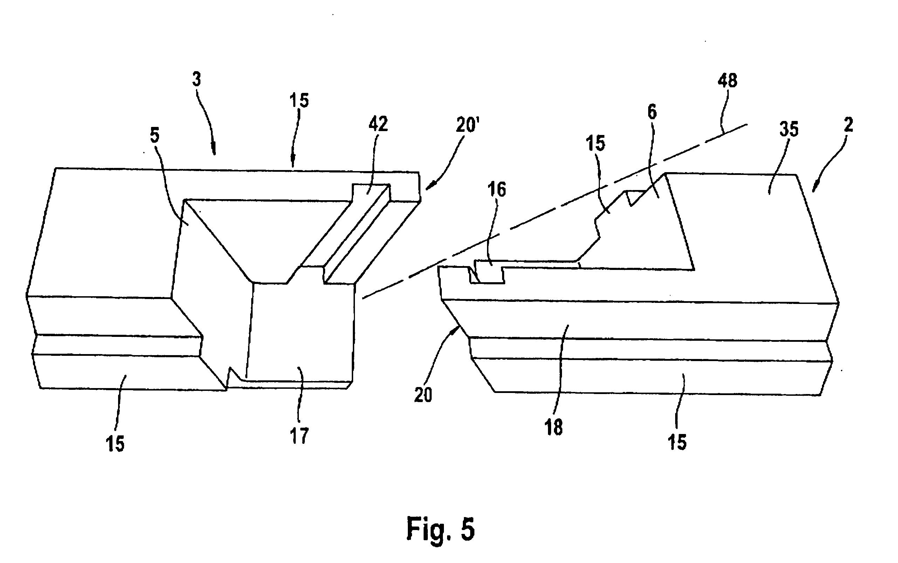

Die beiden Seitenteile 27, 28 des Gehäuses 1 weisen je eine parallel zur Grundplatte 26 verlaufende Nut 14 auf und bilden mit der Grundplatte 26 eine rechteckförmige Backenführungsausnehmung 9, die sich ebenfalls über die gesamte Länge des Gehäuses 1 erstreckt und zur Aufnahme von zwei in etwa L-förmig und identisch ausgebildeten, spiegelbildlich angeordneten Greiferwerkzeugbacken 2, 3 dient (Figur 5).

Jede Greiferwerkzeugbacke 2, 3 besteht aus einer Platte 16 bzw. 17 und einem rechtwinklig dazu angeordneten Seitenteil 18, an das sich ein rechtwinklig dazu angeordnetes, blockförmiges Querteil 19 mit einer geneigt verlaufenden Gleitfläche 5 bzw. 6 anschließt (Figur 3). Die Oberfläche der Gleitflächen 5, 6 schließt mit der Oberseite 35 des Gehäuses 1 einen Winkel bzw. einen Neigungswinkel α von ca. 45° ein. Der Winkel α kann größer oder kleiner ausgebildet sein und hat, wie nachstehend noch erläutert, Einfluss auf den Stellweg der Greiferwerkzeugbacke 2. Bei einem Winkel α von 45° ist die Übersetzung der Bewegung vom Kolben 4 auf die Greiferwerkzeugbacke 2 1:1. Vorteilhaft ist es, wenn der Winkel α zwischen 25° und 55° beträgt.

An die Gleitflächen 5, 6 schließen die Platten 16 bzw. 17 an, die die gleiche Breite wie die Gleitflächen 5, 6 aufweisen und mit Stirnkanten 37 auf der gleichen Querebene enden wie eine geneigt verlaufende Stirnkante 20 des Seitenteils 18. In Fig. 7 ist ein Teil der Platte 17 weggebrochen, um die Funktionsweise des Kolbens 4 besser darstellen zu können.

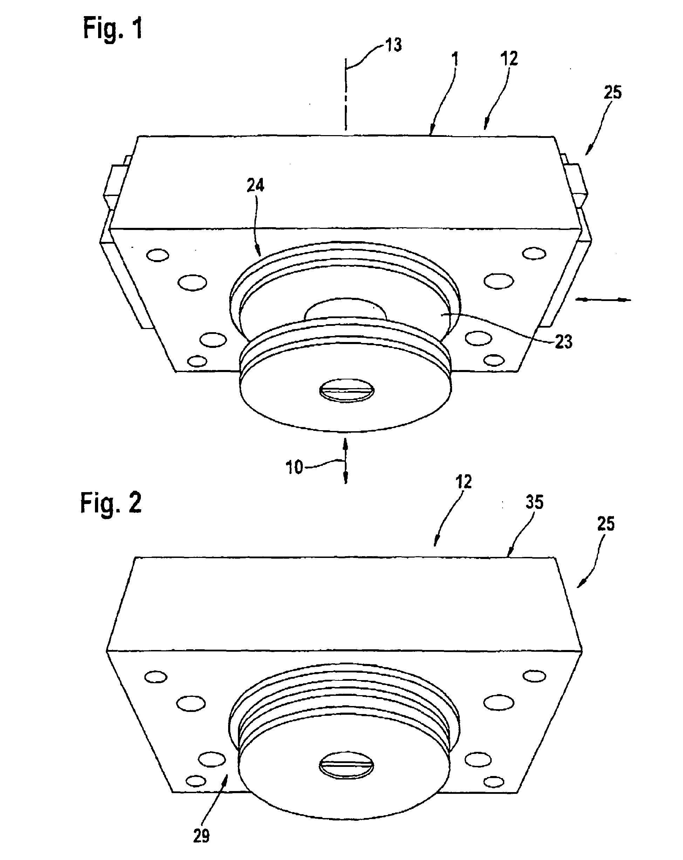

Die Stirnkante 20 bzw. 20' der Greiferwerkzeugbacke 2 bzw. 3 weist ebenfalls einen Winkel α von 45° auf und entspricht dem Neigungswinkel der Gleitflächen 5, 6- Wie aus Fig- 5 hervorgeht, kann die Stirnkante 20 der Greiferwerkzeugbacke 2 gegen die Gleitfläche 6 und die Stirnkante 20' gegen die Gleitfläche 5 zur Anlage kommen, wenn das Stellteil bzw. der Kolben 4 gemäß Fig. 2 vollständig in das Gehäuse 1 eingefahren ist und in dieser Stellung die beiden an die Greiferwerkzeugbacken 2, 3 angeschlossenen, in der Zeichnung nicht dargestellten Greiffinger ein Werkstück fest umschließen bzw. aufnehmen.

Die an der gemäß Fig. 6 linken Greiferwerkzeugbacke 3 angeordnete Platte 17 ist mit Bezug auf die gegenüberliegende Platte 16 um die Stärke der Platte 16 nach oben versetzt angeordnet, so dass die beiden Platten 16, 17 beim zusammenschieben aufeinander geschoben werden und neben der Nut- und Federführung eine Abdeckung für das Stellteil 4 und/oder zusätzliche Führung für die beiden Greiferwerkzeugbacken 2, 3 darstellen.

Die Nut- und Federführung des Parallelgreifers besteht aus den zwei gegenüberliegenden auf gleicher Höhe angeordneten Nuten 14, die an den Innenseiten der Seitenteile 27 und 28 vorgesehen sind und in entsprechend angepasste, an den Außenseiten der Greiferwerkzeugbacken 2, 3 vorgesehene Federn 15 eingreifen. Die Federn 15 sind an der Außenseite des Seitenteils 18 und an einer Außenseite 18' des Querteils 19 angeschlossen. Das Seitenteil 18 erstreckt sich mit der Feder 15 über die gesamte Länge der Greiferwerkzeugbacke 2, so dass die Feder 15 als langes Führungsteil und die gegenüberliegende Feder 15, die an der um ca. 50% kürzeren Außenseite 18' des Querteils 19 angeschlossen ist, als kurzes Führungsteil bezeichnet wird. Die beiden Federn 15 auf der einen Seite der Greiferwerkzeugbacke 2 und die parallel dazu angeordneten beiden anderen Federn 15 auf der anderen Seite der Greiferwerkzeugbacke 2 bilden mit den zugehörigen Nuten 14 im Gehäuse 1 eine Gesamtführung 11.

In Fig. 5 ist eine gestrichelte Linie 48 eingezeichnet, die als diagonale Trennungslinie zwischen den beiden gegenüberliegenden Greiferwerkzeugbacken 2, 3 bezeichnet wird-Durch die diagonale Trennung der beiden Greiferwerkzeugbacken 2, 3 erhält man die sehr lange Gesamtführung 11 aus den beiden zusammengesetzten Federn 15 auf der rechten und linken Seite des Gehäuses 1, wobei gleichzeitig die Gesamtlänge des Gehäuses 1 wesentlich verkürzt werden kann. Hierdurch werden bei Einsparung von Materialkosten auch die Führungseigenschaften der beiden Greiferwerkzeugbacken 2, 3 wesentlich verbessert.

Die Nuten 14 und Federn 15 wirken derart zusammen, dass beim Auf- oder Abwärtsverstellen des nachstehend beschriebenen Stellteils 4 die Greiferwerkzeugbacken 2, 3 quer zu einer Bewegungsebene 10 bzw- einer Mittelachse 13 des Stellteils 4 auseinander- oder zusammengeschoben werden.

Zwischen den beiden Greiferwerkzeugbacken 2, 3 ist das Stellteil 4 mit Gleitflächen 45, 46 vorgesehen, die mit Bezug auf die Mittelachse 13 des Stellteils 4 geneigt verlaufend und ebenfalls in einem Winkel von 45° mit Bezug auf eine obere Stirnseite 43 des Kolbens 4 angeordnet sind.

Das Stellteil 4 sowie die Greiferwerkzeugbacken 2, 3 weisen die miteinander in Eingriff stehenden Federn 39, 40 und Nuten 41, 42 auf. Die Gleitflächen 5, 6 sowie die Federn 39, 40 und die Nuten 41, 42 wirken derart zusammen, dass beim Auf- oder Abwärtsverstellen des Stellteils bzw. Kolbens 4 die Greiferwerkzeugbacken 2, 3 quer zu der Bewegungsebene 10 bzw. der Mittelachse 13 des Stellteils 4 auseinander- oder zusammengeschoben werden.

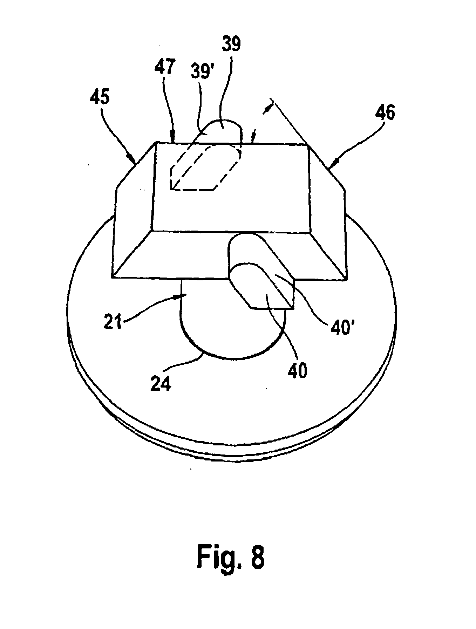

Der Kolben 4, der in Fig. 7 und 8 veranschaulicht ist, besteht aus einer Kolbenstange 21 und einer Kolbenplatte 22 und ist mit Hilfe einer Dichtplatte 23 an das Gehäuse 1 angeschlossen und/oder in einer in der Dichtplatte 23 vorgesehenen Öffnung 24 verschiebbar aufgenommen. Der Kolben 4 weist an seinen beiden Außenseiten die beiden gegenläufigen Federn 39, 40 auf, die jeweils mit seinen Gleitflächen 45, 46 einen Winkel α von 45° einschließen. Die Federn 39, 40 sowie die beiden Nuten 41, 42 bilden den Schrägzug zum verstellen der beiden gegenüberliegenden Greiferwerkzeugbacken 2, 3.

In Fig. 7 ist der Kolben 4 mit seiner in der Zeichnung nur angedeuteten Feder 39 auf der hinteren Seite des Kolbens 4 und auf der vorderen Seite mit der Feder 40 dargestellt. Die hintere Feder 39 greift gemäß Fig. 5 und 7 in die Nut 41 der Greiferwerkzeugbacke 2 ein, während die vordere Feder 40 in die Nut 42 der Greiferwerkzeugbacke 3 eingreift.

Bei der Montage des Kolbens 4 wird dieser durch die im Gehäuse 1 vorgesehene Öffnung 33 geführt und mit Hilfe der Dichtplatte 23 an das Gehäuse 1 angeschlossen und abgedichtet. Der Kolben 4 ist in einem in der Zeichnung nicht dargestellten Kolbengehäuse verschiebbar gelagert. Das Kolbengehäuse wird an die Unterseite 29 des Gehäuses 1 angeschlossen. Der Kolben 4 ist mit Hilfe eines in der Zeichnung nicht dargestellten Dichtrings, der in einer an der Kolbenplatte 22 vorgesehenen Ringnut 44 aufgenommen ist, abgedichtet. Das Verstellen kann hydraulisch oder pneumatisch erfolgen. Wird gemäß Fig. 2 die untere Seite der Kolbenplatte 22 beaufschlagt, so werden die beiden Greiferwerkzeugbacken 2, 3 nach innen in die Stellung gemäß Fig. 2 gefahren, so dass die Greiferfinger ein Werkstück fest umklammern und halten können. Wird die Kolbenplatte 22 von der anderen Seite beaufschlagt, nehmen die beiden Greiferwerkzeugbacken 2, 3 die Stellung gemäß Fig. 1 ein und die Greiferfinger können das Werkstück wieder freigeben. Bei diesem Stellvorgang werden die Federn 39, 40 in den Nuten 41, 42 nach oben oder unten verstellt und bewirken durch den erwähnten Schrägaufzug das verstellen der beiden Greiferwerkzeugbacken 2, 3.

Das Gehäuse 1 und/oder die Greiferwerkzeugbacken 2, 3 und/oder alle beweglichen Teile können aus einer Metalllegierung und/oder aus einem Kohlefaserwerkstoff und/oder Glasfaserwerkstoff bestehen. Ebenso ist es möglich, dass nur die Nut 14 und/oder die Feder 15 mit einem Werkstoff aus Kohlefasern und/oder Glasfasern ummantelt bzw. ausgekleidet sind.

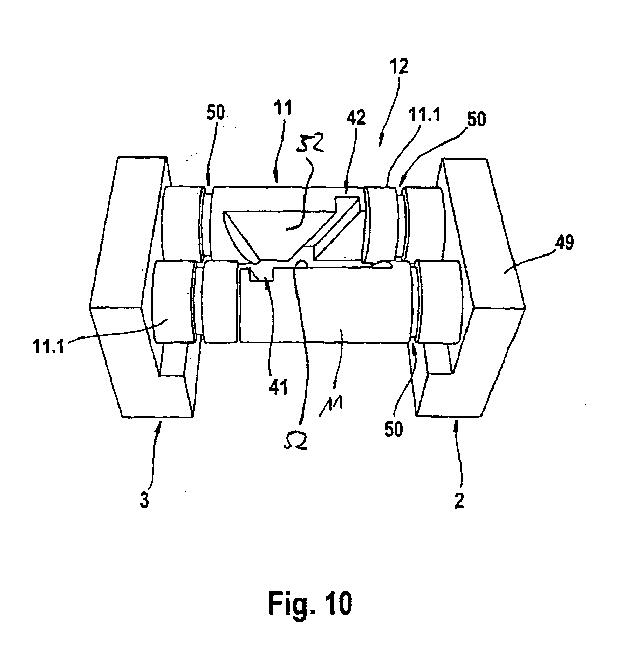

In den Fig. 10, 11 und 12 sind ist ein erfindungsgemäßes Ausführungsbeispiel des Parallelgreifers 12 bzw. des Gehäuses 1 dargestellt. Jede Greiferwerkzeugbacke 2, 3 ist mit zwei parallel verlaufenden Backenführungen 11, 11.1 an einer in etwa rechteckförmigen Platte bzw. Halterung 49 befestigt. An der Stirnseite des Gehäuses 1 sind zwei parallel zueinander verlaufende, zylinderförmige Führungen 9 sichtbar, die einen runden Querschnitt aufweisen oder auch einen rechteckförmigen Querschnitt aufweisen können. In den Führungen 9 sind die, einen entsprechend gleich großen Querschnitt aufweisenden, parallel verlaufenden Backenführungen 11, 11.1 einsetz- und verschiebbar gelagert- Die beiden in einer gemeinsamen Backenführungsausnehmung 9 liegenden Backenführungen 11, 11.1 erstrecken sich über die gesamte Länge des Gehäuses 1 und werden mittels in der zeichnung nicht dargestellter Ringdichtungen nach außen abgedichtet. Die Ringdichtungen sind hierzu in in den Backenführungen 11 bzw. 11.1 vorgesehenen Ringnuten 50 aufgenommen. Auf diese Weise kann das Gehäuse 1 vollständig nach außen abgedichtet werden und ist somit sehr gut gegen Schmutz und Feuchtigkeit, insbesondere gegen Spritzwasser geschützt.

Die beiden Backenführungen 11, 11-1 der Greiferwerkzeugbacken 2, 3 sind unterschiedlich lang. In den langen Backenführungen 11 befinden sich der Schrägaufzug bzw. die geneigt verlaufenden Nuten 41 bzw. 42 mit zugehörigen Gleitflächen 41' bzw. 42', die mit Gegenstücken bzw. Federn 39, 40 bzw. Gleitflächen 45, 46 beziehungsweise Gleitrollen 39.1, 40.1 des Stellteils 4 zusammenwirken. Wird das Stellteil 4 nach oben oder nach unten bewegt, so werden die Greiferwerkzeugbacken 2, 3 nach außen oder nach innen verschoben.

Die kürzeren, parallel zu den längeren Backenführungen 11 verlaufenden Backenführungen 11.1 sind als Drehsicherung ausgebildet und wirken mit dem Gehäuse 1 zusammen. Die Drehsicherungen 11.1 können zwar auch an anderer Stelle im Gehäuse vorgesehen werden, sie gewährleisten aber an dieser Stelle ein einwandfreies, exaktes verstellen der Greiferwerkzeugbacken 2, 3, da sie aufgrund ihrer zylindrischen Formgebung mit sehr kleinen Toleranzen auskommen können.

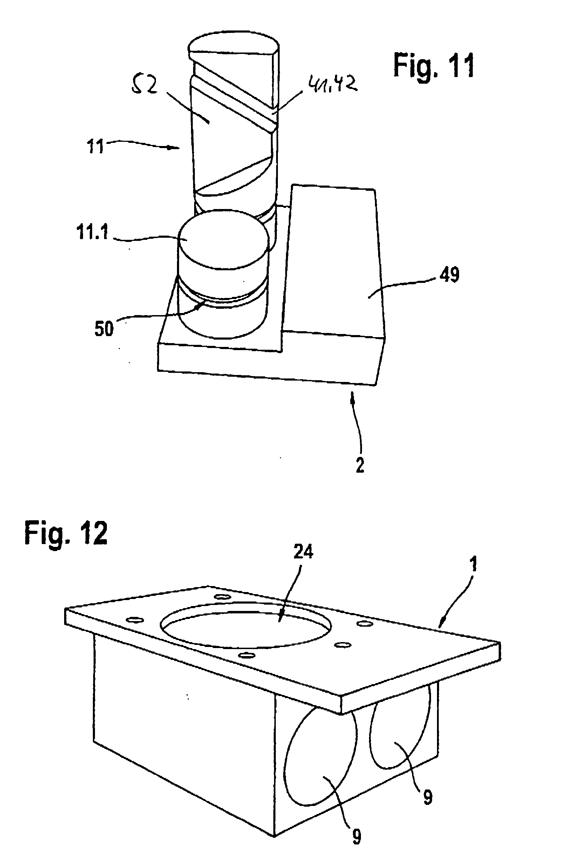

Das in Fig. 12 dargestellte Gehäuse 1 unterscheidet sich von dem in Fig.4 dargestellten Gehäuse 1 nur durch die beiden parallel verlaufenden als Bohrungen 9 ausgebildeten Backenführungen, die in etwa den Nuten 14 entsprechen. Die übrigen Funktionsteile, wie das Stellteil 4 und die Kolbenplatte 22, die in der Öffnung 24 des Gehäuses 1 aufgenommen sind, sind vorzugsweise gleich.

Wie aus insbesondere den Figuren 10 und 11 hervorgeht, weisen die jeweils längeren Backenführungen 11, an denen die Führungsnuten 41, 42 vorgesehen sind, eine Abflachung 52 auf. Die Abflachung 52 ist dabei auf der dem Stellteil 4 zugewandten Seite der Backenführungen 11 vorgesehen. Die Abflachung 52 verläuft parallel zur verstellrichtung des Stellteils 4. Aufgrund des vorsehens der einander zugewandten Abflachungen 52 an den beiden Führungsbacken 11 der Greiferwerkzeugbacken 2 und 3 wird zwischen den Backenführungen 11 ausreichend Bauraum für das Stellteil 4 zur Verfügung gestellt. Hierdurch können die Backenführungen 11, 11.1 der beiden Greiferbacken 2, 3 Bauraum sparend, mit geringfügigem Abstand zueinander benachbart angeordnet sein. Die Abflachungen 52 sind dabei zur Mittellängsachse der jeweiligen Backenführungen 11 hin rückversetzt angeordnet, so dass ausreichend Bauraum für das mit den beiden Backenführungen 11 zusammenwirkende Stellteil vorhanden ist.

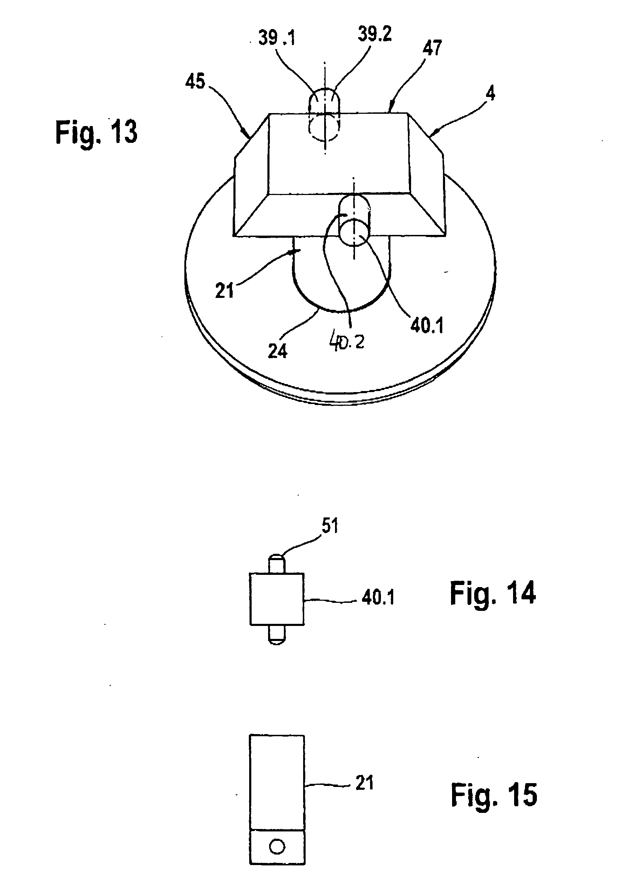

In einem weiteren Ausführungsbeispiel gemäß Figur 13 sind anstelle von Federn 39, 40 gemäß Fig. 8 Gleitrollen 39.1 und 40.1 vorgesehen, die mit Gleitflächen 39.2 bzw. 40.2 ausgestattet sind und in die entsprechenden vertiefungen der Greiferwerkzeugbacken 2 bzw. 3 eingreifen, die als Nuten 41, 42 ausgebildet sein können, in die als Rollen ausgebildete Gleitelemente eingreifen und damit ein verstellen der Greiferwerkzeugbacken 2, 3 nach außen oder nach innen bewirken.

Die Gleitrollen 39.1, 40.1 können, wie in Figur 14 dargestellt ist, mit Hilfe von Lagerzapfen 51 an die in Figur 15 dargestellte Kolbenstange 21 angeschlossen bzw- auf dieser drehbar gelagert sein. Hierdurch werden die Reibungskräfte zwischen den Nuten 41, 42 und den Gleitrollen 39.2, 40.1 auf ein Minimum reduziert.

## Patentansprüche

1. Greiferwerkzeug (12) mit einem Gehäuse (1), in dem zur verschiebbaren Aufnahme von Greiferwerkzeugbacken (2, 3) zwei parallel verlaufende, nebeneinander angeordnete zylinderförmige Backenführungsausnehmungen (9) vorgesehen sind,
wobei jede Greiferwerkzeugbacke (2, 3) zwei parallel verlaufende, nebeneinander angeordnete, sich in Richtung der Bewegungsebene (10) der Greiferwerkzeugbacken (2, 3) erstreckende, in den Backenführungsausnehmungen (9) geführte Backenführung (11, 11.1) aufweist,
wobei zwischen einer Backenführung (11) der einen Greiferwerkzeugbacken (2, 3) und einer Backenführung (11) der anderen Greiferwerkzeugbacken (3, 2) ein quer zur Bewegungsebene der Greiferwerkzeugbacken (2, 3) verstellbares Stellteil (4) derart vorgesehen ist und auf diese Backenführungen (11) einwirkt, dass beim Auf- oder Abwärtsverstellen des Stellteils (4) die Greiferwerkzeugbacken (2, 3) quer zu einer Bewegungsebene (10) des Stellteils (4) auseinander- oder zusammengeschoben werden,
wobei die jeweils andere Backenführung (11.1) der jeweiligen Greiferwerkzeugbacke (2, 3) als Drehsicherung in der jeweiligen Backenführungsaushehmung (9) mit dem Gehäuse (1) zusammenwirkt,
wobei die die Drehsicherung bildende Backenführung (11.1) der einen Greiferwerkzeugbacke (2, 3) von der gleichen Backenführungsausnehmung (9) aufgenommen ist, wie die mit dem Stellteil (4) zusammenwirkende Backenführung (11) der jeweils anderen Greiferwerkzeugbacke (3,2).

2. Greiferwerkzeug (12) nach Anspruch 1, **dadurch gekennzeichnet, dass** die nebeneinander angeordneten Backenführungen (11) einer Greiferwerkzeugbacke (2, 3) in Richtung ihrer Bewegungsebene (10) eine unterschiedlich große Länge aufweisen.

3. Greiferwerkzeug (12) nach Anspruch 1 oder 2, **dadurch gekennzeichnet, dass** die Backenführungen an einer Greiferwerkzeugbacke und/oder dass sämtliche Backenführungen (11, 11.1) einen identischen Querschnitt aufweisen.

4. Greiferwerkzeug (12) nach wenigstens einem der vorhergehenden Ansprüche, **dadurch gekennzeichnet, dass** die Backenführungen (11, 11.1) eine runden Querschnitt aufweisen.

5. Greiferwerkzeug (12) nach Anspruch 4, **dadurch gekennzeichnet, dass** in den Backenführungen (11, 11.1) und/oder an den Backenführungsausnehmungen (9) Ringnuten (50) für Ringdichtungen vorgesehen sind.

6. Greiferwerkzeug (12) nach wenigstens einem der vorhergehenden Ansprüche, **dadurch gekennzeichnet, dass** die Backenführungen in dem Bereich; in dem sie mit dem Stellteil (4) zusammenwirken, eine parallel zur Verstellrichtung des Stellteils (4) verlaufende Abflachung (52) aufweisen.

7. Greiferwerkzeug (12) nach wenigstens einem der vorhergehenden Ansprüche, **dadurch gekennzeichnet, dass** je Greiferwerkzeugbacke zumindest eine Backenführung (11.1) eine geneigt verlaufende Gleitfläche (41', 42') aufweist, die mit zumindest einer geneigt verlaufenden Gleitfläche des quer zur Bewegungsebene der Greiferwerkzeugbacken (2, 3) verstellbaren Stellteils (4) zusammenwirkt.

8. Greiferwerkzeug (12) nach wenigstens einem der vorhergehenden Ansprüche, **dadurch gekennzeichnet, dass** das Stellteil (4) und/oder die mit dem Stellteil (4) zusammenwirkende Backenführung (11) mit miteinander in Eingriff stehenden Getriebeelementen (41, 42, 39, 40) ausgestattet sind.

9. Greiferwerkzeug (12) nach Anspruch 8, **dadurch gekennzeichnet, dass** die Getriebeelemente backenführungsseitige und/oder stellteilseitige, miteinander zusammenwirkende geneigte Gleitflächen (39', 40', 41', 42') aufweisen.

10. Greiferwerkzeug (12) nach Anspruch 8 oder 9, **dadurch gekennzeichnet, dass** die Getriebeelemente von backenführungsseitigen bzw. stellteilseitigen Nuten (41, 42) und mit den Nuten (41, 42) zusammenwirkenden Federn (39, 40), Gleitrollen (39.2, 40.1) und/oder Führungszapfen gebildet sind.

11. Greiferwerkzeug (12) nach wenigstens einem der vorhergehenden Ansprüche, **dadurch gekennzeichnet, dass** in der langen Backenführung (11) der einen Greiferwerkzeugbacke (2) eine eine Gleitfläche (41') aufweisende erste Nut (41) und in der zweiten Backenführung (11) der anderen Greiferwerkzeugbacke (3) eine zweite, eine Gleitfläche (42') aufweisende Nut (42) vorgesehen ist, wobei die Neigungen der beiden Nuten (41, 42) mit Bezug auf eine Längsmittelachse (13) einer Kolbenstange (21) oder in der Seitenansicht der Greiferwerkzeugbacke (3) V-förmig zueinander ausgerichtet sind.

12. Greiferwerkzeug (12) nach wenigstens einem der vorhergehenden Ansprüche, **dadurch gekennzeichnet, dass** die an je einer Außenseite bzw. einem Seitenteil des Stellteils (4) vorgesehene Nut und/oder Feder (39) mit Bezug auf die an der anderen Außenseite bzw. dem anderen Seitenteil vorgesehene Feder (40) und/oder Nut gegenläufig geneigt angeordnet bzw. in der Ansicht von der Seite V-förmig zueinander ausgerichtet sind.

## Claims

1. A gripping tool (12), having a housing (1), in which two parallel extending, side-by-side arranged, cylinder-shaped cheek guidance recesses (9) are provided for the displaceable reception of gripping tool cheeks (2, 3).
wherein each gripping tool cheek (2, 3) has two parallel extending, side-by-side arranged cheek guidance elements (11, 11,2), which extend in the direction of the movement plane (10) of the gripping tool cheeks (2, 3) and are guided in the cheek guidance recesses (9),
wherein an adjustment element (4), which can be shifted transversely to the movement plane of the gripping tool cheeks (2, 3), is provided between one cheek guidance element (11) of the one gripping tool cheek (2, 3) and one cheek guidance element (11) of the other gripping tool cheek (3, 2) and acts on these cheek guidance elements (11) in such a way that, in the course of upward or downward adjustment of the adjusting element (4), the gripping tool jaws (2, 3) are pushed apart or together transversely to a movement plane (10) of the adjusting element (4),
wherein the respectively other cheek guidance element (11.1) of the respective gripping tool cheek (2, 3) works together with the housing (1) to form a relative rotation preventer in the respective cheek guidance recesses (9),
wherein the cheek guidance element (11.1) of the one cheek guidance element (11.1) constituting the relative rotation preventer is received in the same cheek guidance recess (9) as the cheek guidance element (11) of the respectively other gripping tool cheek (3, 2) which works together with the adjusting element (4).

2. The gripping tool (12) in accordance with claim 1, **characterized in that** the side-by-side arranged cheek guidance elements (11) of a gripping tool cheek (2, 3) have a different length in the direction of their movement plane (10).

3. The gripping tool (12) in accordance with claim 1 or 2, **characterized in that** the cheek guidance elements on one gripping tool cheek, and/or all cheek guidance elements (11, 11.1) have identical cross sections.

4. The gripping tool (12) in accordance with at least one of the preceding claims, **characterized in that** the cheek guidance elements (11, 11.1) have a round cross section.

5. The gripping tool (12) in accordance with claim 4, **characterized in that** annular grooves (50) for O-rings are provided in the cheek guidance elements (11, 11.1) and/or in the cheek guidance recesses (9).

6. The gripping tool (12) in accordance with at least one of the preceding claims, **characterized in that** in the area in which they work together with the adjusting element (4), the cheek guidance elements have a flattened section (52), which extends parallel in respect to the adjustment direction of the adjusting element (4).

7. The gripping tool (12) in accordance with at least one of the preceding claims, **characterized in that** at least one cheek guidance element (11.1) per gripping tool cheek has a slopingly extending sliding face (41', 42'), which works together with at least one slopingly extending sliding face of the adjusting element (4), which element is adjustable transversely in respect to the movement plane of the gripping tool cheeks (2, 3).

8. The gripping tool (12) in accordance with at least one of the preceding claims, **characterized in that** the adjusting element (4), and/or the cheek guidance element (11) working together with the adjusting element (4), are equipped with gear elements (41, 42, 39, 40), which are in engagement with each other.

9. The gripping tool (12) in accordance with claim 8, **characterized in that**, on the cheek guidance side and/or the adjusting element side, the gear elements have sliding faces (39', 40', 41', 42'), which work together with each other.

10. The gripping tool (12) in accordance with claim 8 or 9, **characterized in that** the gear elements are constituted by grooves (41, 42) on the cheek guidance side and/or the adjusting element side, and by springs (39, 40), sliding rollers (39.2, 40.1) and/or guide pins, which work together with the grooves (41, 42).

11. The gripping tool (12) in accordance with at least one of the preceding claims, **characterized in that** a first groove (41) having a sliding face (41') is provided in the long cheek guidance element (11) of the one gripping tool cheek (2), and a second groove (42), having a sliding face (42') is provided in the second cheek guidance element (11) of the other gripping tool cheek (3), wherein the inclinations of the two grooves (41, 42) are oriented in a V-shape to each other in respect to a longitudinal center axis (13) of a piston rod (21), or in the lateral view of the gripping tool cheek (3).

12. The gripping tool (12) in accordance with at least one of the preceding claims, **characterized in that** the groove and/or spring (39) provided on respectively one exterior or on a lateral part of the adjusting element (4) is arranged in relation to the spring (40) arranged on the other exterior and/or the other lateral element inclined in the opposite direction, or they are aligned in a V-shape in respect to each other in a view from the side.

## Revendications

1. Outil de préhension (12) comportant un carter (1) dans lequel sont prévus, pour recevoir de façon mobile des mâchoires d'outil de préhension (2, 3), deux évidements de guidage de mâchoire (9) cylindriques disposés l'un à côté de l'autre, s'étendant parallèlement,
chaque mâchoire d'outil de préhension (2, 3) présentant deux guidages de mâchoire (11, 11.1) guidés dans les évidements de guidage de mâchoire (9), s'étendant dans la direction du plan de déplacement (10) des mâchoires d'outil de préhension (2, 3), disposés parallèlement l'un à côté de l'autre,
un organe de commande (4) déplaçable transversalement au plan de déplacement des mâchoires d'outil de préhension (2, 3) étant prévu entre un guidage de mâchoire (11) de l'une des mâchoires d'outil de préhension (2, 3) et un guidage de mâchoire (11) de l'autre mâchoire d'outil de préhension (3, 2) et agissant sur ces guidages de mâchoire (11) de telle sorte que, lors du déplacement vers le haut ou vers le bas de l'organe de commande (4), les mâchoires d'outil de préhension (2, 3) s'écartent ou se rapprochent transversalement à un plan de déplacement (10) de l'organe de commande (4),
l'autre guidage de mâchoire (11.1) de la mâchoire d'outil de préhension (2, 3) respective coopérant avec le carter (1) en tant que dispositif anti-rotation dans l'évidement de guidage de mâchoire (9) respectif,
le guidage de mâchoire (11.1) formant le dispositif anti-rotation d'une mâchoire d'outil de préhension (2, 3) étant reçu par le même évidement de guidage de mâchoire (9) que le guidage de mâchoire (11) coopérant avec l'organe de commande (4) de l'autre mâchoire d'outil de préhension (3, 2).

2. Outil de préhension (12) selon la revendication 1, **caractérisé en que** les guidages de mâchoire (11) disposés l'un à côté de l'autre d'une mâchoire d'outil de préhension (2, 3) présentent une longueur différente dans la direction de leur plan de déplacement (10).

3. Outil de préhension (12) selon la revendication 1 ou 2, **caractérisé en ce que** les guidages de mâchoire sur une mâchoire d'outil de préhension et/ou tous les guidages de mâchoire (11, 11.1) présentent une section transversale identique.

4. Outil de préhension (12) selon au moins l'une des revendications précédentes, **caractérisé en ce que** les guidages de mâchoire (11, 11.1) présentent une section transversale ronde.

5. Outil de préhension (12) selon la revendication 4, **caractérisé en ce que** des rainures annulaires (50) pour des joints annulaires sont prévues dans les guidages de mâchoire (11, 11.1) et/ou sur les évidements de guidage de mâchoire (9).

6. Outil de préhension (12) selon au moins l'une des revendications précédentes, **caractérisé en ce que** les guidages de mâchoire présentent, dans la zone où ils coopèrent avec l'organe de commande (4), un aplatissement (52) s'étendant parallèlement au sens de déplacement de l'organe de commande (4).

7. Outil de préhension (12) selon au moins l'une des revendications précédentes, **caractérisé en ce que**, pour chaque mâchoire d'outil de préhension, au moins un guidage de mâchoire (11.1) présente une surface de glissement (41', 42') s'étendant de manière inclinée, laquelle coopère avec au moins une surface de glissement s'étendant de manière inclinée de l'organe de commande (4) déplaçable transversalement au plan de déplacement des mâchoires d'outil de préhension (2, 3).

8. Outil de préhension (12) selon au moins l'une des revendications précédentes, **caractérisé en ce que** l'organe de commande (4) et/ou le guidage de mâchoire (11) coopérant avec l'organe de commande (4) sont équipés d'éléments de mécanisme (41, 42, 39, 40) en prise les uns avec les autres.

9. Outil de préhension (12) selon la revendication 8, **caractérisé en ce que** les éléments de mécanisme présentent, du côté guidage de mâchoire et/ou côté organe de commande, des surfaces de glissement (39', 40', 41', 42') inclinées qui coopèrent entre elles.

10. Outil de préhension (12) selon la revendication 8 ou 9, **caractérisé en ce que** les éléments de mécanisme sont formés par des rainures (41, 42) côté guidage de mâchoire ou côté organe de commande, et par des languettes (39, 40), rouleaux de glissement (39.2, 40.1) et/ou tourillons de guidage coopérant avec les rainures (41, 42).

11. Outil de préhension (12) selon au moins l'une des revendications précédentes, **caractérisé en ce qu'**il est prévu, dans le guidage de mâchoire (11) long d'une mâchoire d'outil de préhension (2) une première rainure (41) présentant une surface de glissement (41') et, dans le deuxième guidage de mâchoire (11) de l'autre mâchoire d'outil de préhension (3), une seconde rainure (42) présentant une surface de glissement (42'), les inclinaisons des deux rainures (41, 42) étant orientées en forme de V l'une avec l'autre par rapport à un axe médian longitudinal (13) d'une tige de piston (21) ou dans la vue de côté de la mâchoire d'outil de préhension (3).

12. Outil de préhension (12) selon au moins l'une des revendications précédentes, **caractérisé en ce que** la rainure et/ou languette (39) prévues sur un côté extérieur ou sur une partie latérale de l'organe de commande (4), sont disposées inclinées en sens opposé par rapport à la languette (40) et/ou rainure prévue sur l'autre côté extérieur ou l'autre partie latérale, ou sont orientées en forme de V l'une avec l'autre dans la vue de côté.
